# FASCICULE DE BREVET EUROPEEN

(11) **EP 0 827 857 B1**
(45) Date de publication et mention de la délivrance du brevet: **27.12.2000**
(21) Numéro de dépôt: 97402048.9
(22) Date de dépôt: 03.09.1997
(51) Int. Cl.: B60K 5/12, F16M 5/00

(54) **Platine pour support limiteur élastique d'un moteur de véhicule**
Platine für elastisches, begrenztes Motorlager
Support plate for a limiting elastic engine mount

(30) Priorité: 06.09.1996 FR 9610897
(43) Date de publication de la demande: 11.03.1998
(73) Titulaire: HUTCHINSON, 75008 Paris (FR)
(72) Inventeur: Mellon, Paul, 28200 Chateaudun (DE)
(74) Mandataire: Picard, Jean-Claude Georges

(56) Documents cités:
- DE-A- 3 927 485
- PATENT ABSTRACTS OF JAPAN vol. 013, no. 006 (M-781), 9 janvier 1989 & JP 63 219424 A (YAMAKAWA KOGYO KK), 13 septembre 1988,

## Description

La présente invention concerne une platine pour support limiteur élastique d'un moteur de véhicule, cette platine étant percée, en deux extrémités opposées, de trous permettant sa fixation à la caisse de ce véhicule et comportant des arceaux propres à retenir des doigts d'une armature reliée d'une part au moteur et d'autre part élastiquement à ladite platine.

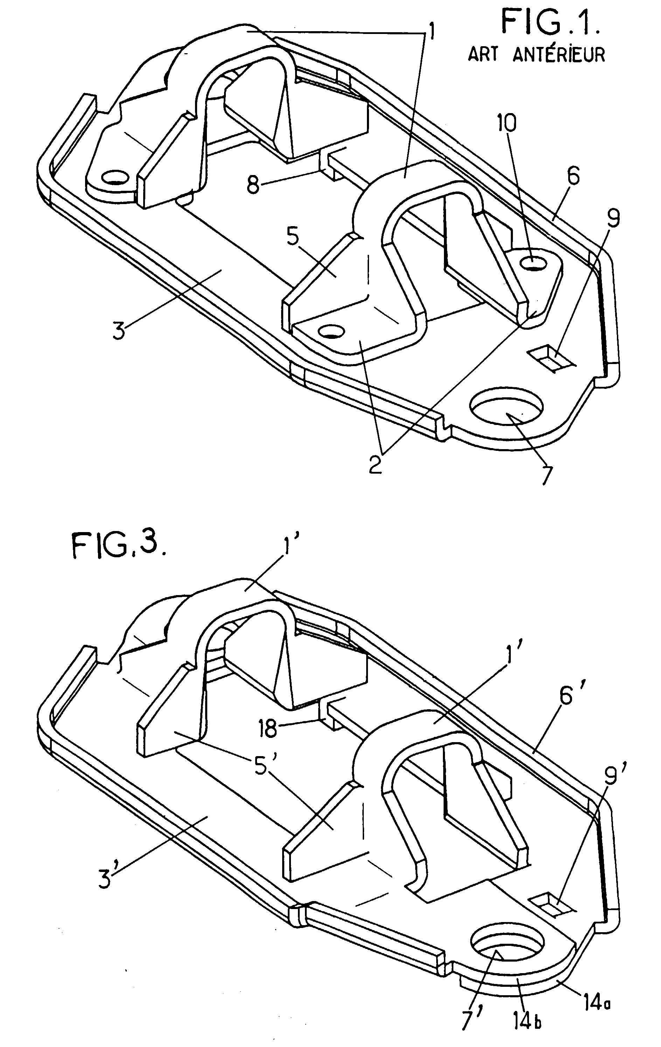

Une telle platine de type connu est représentée en perspective à la figure 1 des dessins ci-annexés. On voit qu'elle comporte deux arceaux 1 pourvus de pieds 2 de fixation à une plaque de base 3, cette platine étant donc constituée de trois pièces distinctes. Les pieds 2 des arceaux 1 sont fixés sur la plaque de base 3 par tous moyens appropriés, par exemple par des rivets, dont les trous sont référencés en 10. La référence 5 désigne des ailes d'étai des arceaux 1 et la référence 6 des rebords de rigidification pliés de la plaque de base 3. Les trous de fixation de cette plaque sur la caisse du véhicule sont référencés 7. 8 désigne une languette découpée et pliée permettant le positionnement de ladite plaque sur la caisse ; 9 désigne l'ouverture laissée dans la plaque après découpe et pliage vers le bas d'une autre languette de positionnement.

Ce mode de réalisation antérieur nécessite deux outillages de découpe et emboutissage et une opération finale de rivetage, ce qui rend le prix de revient d'une telle pièce relativement élevé.

Le but de la présente invention est de remédier à cet inconvénient de la technique antérieure, et de pouvoir réaliser sensiblement la même pièce plus simplement et à moindre coût.

A cet effet, une platine de limiteur conforme à la présente invention,du type défini au début, est caractérisée en ce qu'elle est constituée d'une unique pièce de tôle découpée à plat, cette pièce comportant deux moitiés reliées l'une à l'autre par des pontets et pourvues chacune de deux pattes se correspondant et percées d'ouvertures à chacune de leurs deux extrémités opposées, une opération de pliage selon des lignes de pliage déterminées permettant alors d'obtenir l'érection desdits arceaux à partir desdits pontets ainsi que la superposition desdites pattes qui se correspondent jusqu'à coïncidence de leurs ouvertures respectives pour la constitution desdits trous de fixation auxdites extrémités opposées de la platine, l'assujettissement l'une sur l'autre des deux dites pattes s'effectuant de préférence par sertissage.

Ainsi il n'y aura plus qu'une seule opération de découpe et une seule opération de pliage pour obtenir pratiquement la même pièce que précédemment, sans aucun rivetage ou analogue.

D'autres dispositions de l'invention apparaîtront ci-dessous à la lecture d'un exemple nullement limitatif de réalisation, donné avec référence aux autres figures du dessin, dans lequel :
- la figure 2 est une vue en plan d'un flan découpé avec lignes de prépliage permettant par pliage d'obtenir la platine de limiteur susdécrite ;
- la figure 3 est une vue en perspective analogue à celle de la figure 1, montrant la platine obtenue après pliage du flan de la figure 2 ;
- la figure 4 est une vue en coupe partielle montrant le sertissage des pattes d'extrémité l'une sur l'autre ; et
- la figure 5 est une vue de profil de l'ensemble du limiteur.

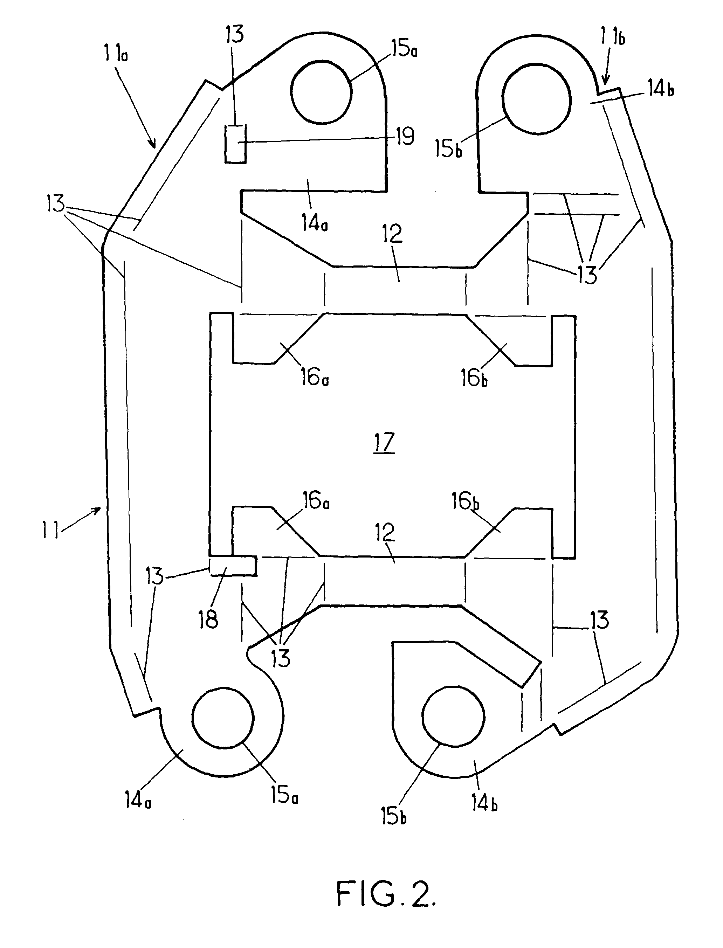

Le flan représenté en plan à la figure 2 constitue une unique pièce de tôle découpée à plat, référencée 11. Cette pièce comporte deux moitiés 11a et 11b reliées l'une à l'autre par des pontets 12. A ses deux extrémités, chaque moitié 11a et 11b comporte des pattes 14a, 14b, percées d'ouvertures respectives 15a, 15b. On voit aussi sur la figure 2 que les moitiés 11a, 11b présentent des pointes 16a, 16b en saillie dans le trou rectangulaire 17 qui les sépare. Enfin deux languettes 18 et 19 sont découpées dans la moitié gauche 11a du flan 11, à laquelle elles restent reliées.

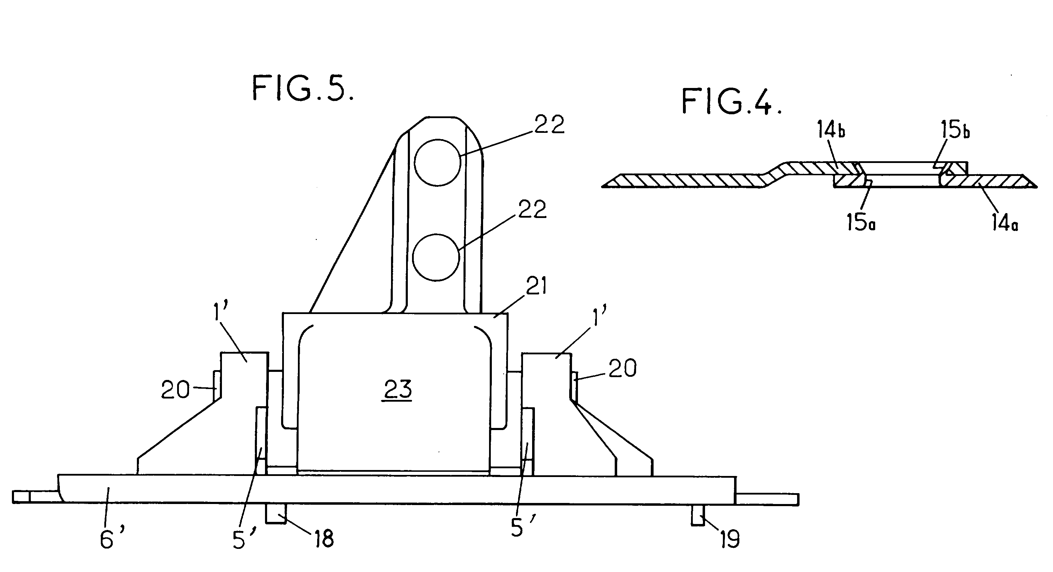

Le flan 11 peut être plié dans une plieuse, selon des lignes de pliage déterminées 13, jusqu'à mise en coïncidence mutuelle des ouvertures 15a et 15b pour la constitution des trous de fixation 7', ce qui permet d'obtenir la platine conforme à l'invention, représentée à la figure 3. On voit que les pontets 12 sont alors érigés au-dessus du plan de la plaque de base 3', dont les rebords pliés 6' assurent la rigidification, tandis que les pointes 16a, 16b constituent, pour les arceaux 1' formés par l'érection des pontets, des ailes d'étai 5' analogues aux ailes 5 de la platine connue. On observe en 18 l'une des deux languettes de positionnement en position pliée, et en 9' le trou laissé dans la platine par le pliage de l'autre languette de positionnement 19.

On voit ainsi que la fabrication de la platine de la figure 3 a pu être considérablement simplifiée par rapport à celle de la platine connue, représentée à la figure 1.

A la figure 4 on a montré un mode de réalisation possible de la fixation des pattes 14b sur les pattes 14a, ici par sertissage au niveau des ouvertures correspondantes 15b et 15a.

Sur la vue de profil de la figure 5 on a montré l'ensemble d'un limiteur pour moteur de véhicule, dans lequel ce que l'on a appelé plus haut les "doigts de l'armature" est constitué par les extrémités 20 d'un axe enrobé engagées sous les arceaux 1' et assurant de ce fait la limitation des mouvements du moteur par rapport à la caisse dans les directions perpendiculaires à cet axe en cas d'efforts exceptionnels, la limitation en direction de l'axe étant assurée au niveau de sa branche médiane. L'armature, référencée 21, est solidarisée du moteur par des vis de fixation (non représentées) traversant les trous référencés 22. L'armature 21 est reliée élastiquement à la plaque de base 3' par un bloc de caoutchouc en V, référencé 23, adhérisé sur ladite plaque. Les autres références de la figure 5 désignent les mêmes éléments que sur les autres figures.

Grâce à l'invention, la platine peut être réalisée en tôle, et n'a pas à être moulée dans un bloc de fonte ou d'aluminium. On peut de la sorte respecter facilement les contraintes du cahier des charges quant à l'encombrement et à la résistance de la platine vis-à-vis des efforts importants.

## Revendications

1. Platine pour support limiteur élastique d'un moteur de véhicule, cette platine étant percée, en deux extrémités opposées, de trous (7') permettant sa fixation à la caisse de ce véhicule et comportant des arceaux (1') propres à retenir des doigts d'une armature reliée d'une part au moteur et d'autre part élastiquement à ladite platine, caractérisée en ce qu'elle est constituée d'une unique pièce (11) de tôle découpée à plat, cette pièce (11) comportant deux moitiés (11a, 11b) reliées l'une à l'autre par des pontets (12) et pourvues chacune de deux pattes (14a, 14b) se correspondant et percées d'ouvertures (15a, 15b) à chacune de leurs deux extrémités opposées, une opération de pliage selon des lignes de pliage déterminées (13) permettant alors d'obtenir l'érection desdits arceaux (1') à partir desdits pontets (12) ainsi que la superposition desdites pattes (14a, 14b) qui se correspondent jusqu'à coïncidence de leurs ouvertures respectives (15a, 15b) pour la constitution desdits trous de fixation (7') auxdites extrémités opposées de la platine (3').

2. Platine selon la revendication 1, caractérisée en ce que ladite pièce (11) découpée à plat comporte quatre pointes (16a, 16b) en saillie dans un trou (17) séparant lesdites moitiés (11a, 11b) et constituant après pliage des ailes d'étai (5') pour lesdits arceaux (1').

3. Platine selon la revendication 1 ou 2, caractérisée en ce que l'assujettissement l'une sur l'autre des deux dites pattes (14a, 14b) s'effectue par sertissage.

4. Platine selon l'une quelconque des revendications précédentes, caractérisée en ce que ladite pièce (11) comporte des découpes constituant après pliage des languettes (18, 19) de positionnement de la platine sur ladite caisse du véhicule.

## Patentansprüche

1. Platte zur begrenzenden und elastischen Lagerung eines Fahrzeugmotors, wobei die Platte an zwei entgegengesetzten Endabschnitten von Löchern (7') durchsetzt ist, die eine Befestigung der Platte an der Karosserie des Fahrzeugs gestatten, und Bögen (1') aufweist, die dazu geeignet sind, die Zapfen eines Gestells zu halten, das einerseits mit dem Motor und andererseits elastisch mit der Platte verbunden ist, dadurch gekennzeichnet, daß die Platte aus einem einzigen Stück (11) flach gestanztem Blech gebildet wird, wobei dieses Stück (11) zwei Hälften (11a, 11b) aufweist, die durch Brückenabschnitte (12) miteinander verbunden sind und die jeweils mit zwei einander entsprechenden, an ihren zwei entgegengesetzt liegenden Endabschnitten jeweils von Öffnungen (15a, 15b) durchsetzten Fußabschnitten (14a, 14b) versehen sind, wobei ein Falzvorgang an vorbestimmten Falzlinien (13) ein Aufrichten der Bögen (1') von den Brückenabschnitten (12) ausgehend sowie ein Übereinanderbringen der einander entsprechenden Füße (14a, 14b) bis zur Deckung ihrer jeweiligen Öffnungen (15a, 15b) gestattet, um an den entgegengesetzt liegenden Endabschnitten der Platte (3') die genannten Befestigungslöcher (7') auszubilden.

2. Platte nach Anspruch 1, dadurch gekennzeichnet, daß das flach gestanzte Stück (11) drei Spitzenabschnitte (16a, 16b) aufweist, die in ein die Hälften (11a, 11b) trennendes Loch (17) vorspringen und nach dem Falten Stützflügel (5') für die Bögen (1') bilden.

3. Platte nach Anspruch 1 oder 2, dadurch gekennzeichnet, daß das Befestigen des einen der zwei Fußabschnitte (14a, 14b) auf dem anderen anderen durch Bördeln ausgeführt wird.

4. Platte nach einem der vorhergehenden Ansprüche, dadurch gekennzeichnet, daß das Stück (11) Stanzungen aufweist, die nach dem Falzen Laschen (18, 19) zum Positionieren der Platte an der Karosserie des Fahrzeugs bilden.

## Claims

1. Plate for an elastic limiting bearer of a vehicle engine, this plate being perforated at two opposite ends with holes (7') allowing it to be attached to the body of this vehicle and including arches (1') suitable for holding the fingers of a bracket attached on the one hand to the engine and on the other elastically to the said plate, characterised in that it consists of a single piece (11) of sheet metal cut out of the flat, this piece (11) having two halves (11a, 11b) joined to one another by connecting straps (12) and each having two corresponding lugs (14a, 14b) perforated with apertures (15a, 15b) at each of their two opposite ends, a bending operation along defined lines of bending (13) thus allowing the raising of the said arches (1') formed from the said connecting straps (12) together with the superimposition of the said lugs (14a, 14b) which correspond including the coincidence of their respective apertures (15a, 15b) to form the said fixing holes (7') at the said opposite ends of the plate (3').

2. Plate according to Claim 1 characterised in that the said piece (11) cut out of the flat includes four points (16a, 16b) projecting into a hole (17) separating the said halves (11a, 11b) and, after bending, forming bracing wings (5') for the said arches (1').

3. Plate according to Claim I or 2 characterised in that the securing of the said two lugs (14a, 14b) one to another is carried out by crimping.

4. Plate according to any one of the foregoing Claims, characterised in that the said piece (11) includes cuts forming, after bending, tongues (18, 19) to position the plate on the said vehicle body.
